# EUROPÄISCHE PATENTSCHRIFT

(11) **EP 0 338 553 B1**
(45) Veröffentlichungstag und Bekanntmachung des Hinweises auf die Patenterteilung: **01.12.1993**
(21) Anmeldenummer: 89107112.8
(22) Anmeldetag: 20.04.1989
(51) Int. Cl.: G01G 19/04

(54) **Waage für Schienenfahrzeuge**
Balance for railway vehicles
Balance pour véhicules de chemin de fer

(30) Priorität: 22.04.1988 DE 3813630
(43) Veröffentlichungstag der Anmeldung: 25.10.1989
(73) Patentinhaber: CARL SCHENCK AG, D-64273 Darmstadt (DE)
(72) Erfinder: Buchta, Bernhard, Dipl.-Ing., D-6100 Darmstadt (DE)
(74) Vertreter: Brandt, Ernst-Ulrich, Dipl.-Phys., Dipl.-Ing.

(56) Entgegenhaltungen:
- DE-A- 2 924 190
- DE-C- 822 019
- GB-A- 2 009 940
- SU-A- 584 191
- PATENT ABSTRACTS OF JAPAN, vol. 10, no. 102 (P-448)(2159), 18 April 1986; & JP-A-60 236034

## Beschreibung

Die Erfindung betrifft eine Schienenfahrzeugwaage in einem Schienenstrang mit Schienen und Schwellen, mit einem offenen oder geschlossenen Rahmen zur Ermittlung wirkender Vertikalkräfte.

Bei bekannten Waagen für Schienenfahrzeuge sind die Schienen im Wägebereich auf einer Wägebrücke angeordnet. Die Wägebrücke kann in Stahlkonstruktion ausgeführt sein (DE-PS 1 214 428) oder sie ist als Stahlbetonbrücke ausgebildet. Waagen für Schienenfahrzeuge dieser Art weisen eine gute Meßgenauigkeit auf, erfordern jedoch aufwendige Brückenkonstruktionen und Fundamente bzw. Fundamentgruben und sind daher teuer.

Bei anderen bekannten Einrichtungen zur Gewichtsmessung von Schienenfahrzeugen sind Meßwertaufnehmer zwischen Schienen und Schwellen angeordnet (DE-OS 29 24 190). Diese Einrichtungen haben den Vorteil, daß keine oder keine wesentlichen Änderungen am Gleisunterbau bzw. keine Waagenfundamente erforderlich sind. Ihre Meßgenauigkeit ist jedoch begrenzt.

Aufgabe der vorliegenden Erfindung ist es, eine Schienenfahrzeugwaage anzugeben, die bei guter Meßgenauigkeit ohne wesentliche Eingriffe in den Gleisunterbau in einen Schienenstrang eingebaut ist und die einfach und preisgünstig herzustellen und zu montieren ist. Diese Aufgabe wird durch die im Patentanspruch 1 angegebenen Merkmale gelöst. Die abhängigen Ansprüche betreffen Ausgestaltungen der Erfindung.

Die vorgeschlagene Gleiswaage kann direkt auf die im Schotterbett des Schienenstranges eingebetteten Schwellen montiert werden. Der Einbau erfordert kein besonderes Fundament und keine Fundamentgrube und ist einfach und schnell zu bewerkstelligen. Der Rahmen der Gleiswaage bildet eine steife, stark belastbare Einheit, die alle im Gleis auftretenden Kräfte aufnimmt und auf die Schwellen überträgt und die leicht transportabel ist. Die Waage ist daher auch leicht versetzbar. Sie ist für beliebige Spurbreiten verwendbar.

Es ist vorteilhaft, wenn die Querträger als Meßwertaufnehmer ausgebildet sind und wenn für jede Schiene ein getrennter Rahmen vorgesehen wird, wobei an beiden Seiten einer Schiene je ein Längsträger angeordnet ist. Die Längsträger werden zweckmäßigerweise etwa auf gleicher Höhe wie die Schienen angeordnet, die Querträger liegen zwischen den Schwellen. Wenn sich der Rahmen bzw. die mit den Schwellen verbundenen Längsträger über den eigentlichen Waagenbereich hinaus erstrecken, können Schwachstellen im Gleisrost, die durch Trennstellen an den Fahrschienen am Anfang und am Ende des Waagenbereichs entstehen, vermieden werden.

Die Erfindung wird an einem Ausführungsbeispiel in der Zeichnung dargestellt und in der folgenden Beschreibung näher erläutert. Die Zeichnung zeigt in:
- Fig. 1:: einen Schnitt senkrecht zur Schienenlängsachse durch eine Waage nach der Erfindung für einen Schienenstrang,
- Fig. 2:: Draufsicht mit Teilausschnitt aus einer Waage für Schienenfahrzeuge mit getrenntem Rahmen für beide Schienenstränge.

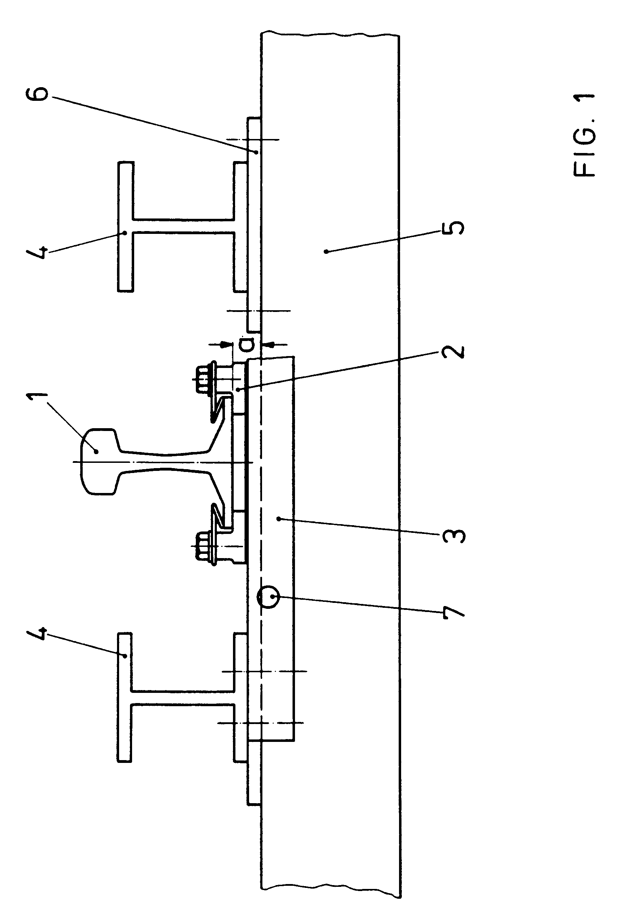

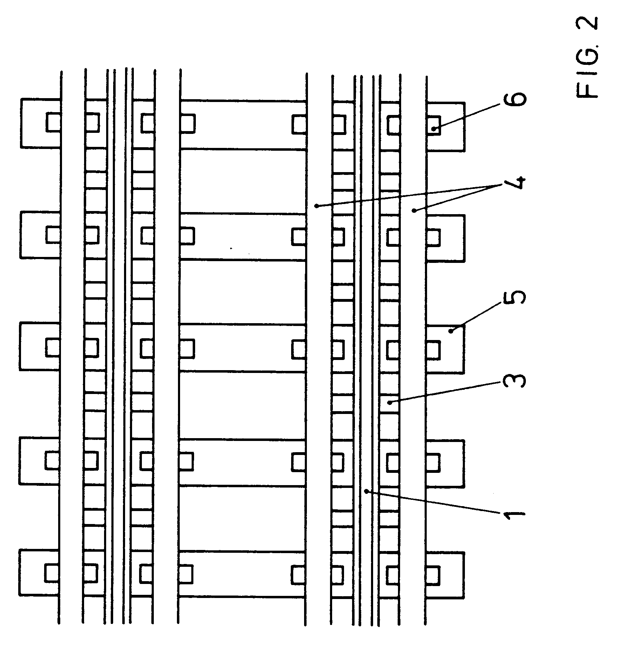

In Fig. 1 ist eine im Querschnitt dargestellte Schiene bzw. Fahrschiene 1 über Befestigungselemente 2 mit einem als Meßwertaufnehmer ausgebildeten Querträger 3 verbunden. Der Querträger bzw. Meßwertaufnehmer dient im dargestellten Ausführungsbeispiel als Verbindungselement zwischen zwei Balken oder Längsträgern 4 und bildet mit den Längsträgern einen Rahmen, der sich längs der Schiene 1 erstreckt und auf Schwellen 5 abgestützt ist, wie aus Fig. 2 erkennbar ist. Die Längsträger 4 können hierbei direkt oder über Zwischenplatten 6 auf den Schwellen 5 befestigt sein. Der Rahmen aus Längs- und Querträgern nimmt alle auf die Schiene 1 einwirkenden Kräfte auf und überträgt sie auf die Schwellen. Anstelle von zwei Balken oder Längsträgern 4 können auch ein Balken oder mehr als zwei Balken die Kraftübertragung übernehmen.

Aus Fig. 2 geht hervor, daß die Meßwertaufnehmer bzw. die Querträger 3 jeweils zwischen den Schwellen 5 angeordnet sind. Die Fahrschiene 1 ist im Waagenbereich von den Schwellen getrennt. Zwischen dem Schienenfuß und der Schwellenoberkante ist ein Abstand a vorhanden (Fig. 1), der so gewählt ist, daß der Schienenfuß bei maximaler Belastung nicht auf den Schwellen aufliegt.

Zweckmäßigerweise ist für jede Schiene eines Schienenstrangs ein besonderer Rahmen vorhanden, wie in Fig. 2 dargestellt. Es kann jedoch auch ein gemeinsamer Rahmen für beide Schienen eines Schienenstranges vorgesehen werden. Der Rahmen kann z. B. auch aus zwischen den Schienen liegenden Längsträgern oder einem zwischen den Schienen angeordneten Trägerverband bestehen. Die Querträger können in diesem Fall kragarmförmig ausgebildet werden. Bei einer solchen Anordnung sind an der Außenseite der Fahrschienen keine Längsträger erforderlich.

An den Meßwertaufnehmern bzw. Querträgern 3 sind in bekannter Weise Messelemente oder Aufnehmer 7 zur Messung der auf die Schienen einwirkenden Vertikalkräfte angeordnet. Als Aufnehmer können Schubspannungsaufnehmer oder andere geeignete Aufnehmer, z. B. mit Zug-, Druck-, Scher- oder Biegespannungsmessung verwendet werden. Die Meßwertaufnehmer 3 sind hierbei jeweils dem Meßelement bzw. Aufnehmertyp entsprechend ausgebildet.

Die Waage nach der Erfindung kann am Anfang und am Ende durch Trennstellen an den Fahrschienen vom übrigen Gleisstrang abgetrennt werden (nicht dargestellt). In diesem Fall ist es zweckmäßig, wenn sich der Rahmen mit den Längsträgern 4 über den eigentlichen Wägebereich hinauserstreckt. Die Längsträger werden hierbei auch mit einer oder mehreren Schwellen, die unmittelbar vor oder hinter der Trennstelle bzw. der eigentlichen Waage liegen, verbunden. Da auch die Fahrschienen des Schienenstranges mit diesen Schwellen fest verbunden sind, entsteht praktisch keine Unterbrechung im Gleisoberbau.

Die Zahl und die Schaltung der Meßelemente bzw. Aufnehmer 7 richtet sich nach der Wägeaufgabe, also z. B. Fahrtwägung, Standwägung, Achswägung usw. Hierbei können die Aufnehmer 7 z. B. parallel geschaltet werden. Die Meßsignale der Aufnehmer können auch einzeln oder gruppenweise ausgewertet und zur Ermittlung der gewünschten Meßdaten verarbeitet werden.

Die fundamentlose Gleiswaage nach der Erfindung ist für Stand- und Fahrtwägungen von Gleisfahrzeugen unabhängig von Fahrzeugart und Fahrzeuglänge sowie Spurbreite geeignet. Der Einbau erfordert keine zusätzliche Bauhöhe, d. h. das Schwellenniveau im Waagenbereich ist gleich dem übrigen Schwellenniveau.

## Patentansprüche

1. Schienenfahrzeugwaage in einem Schienenstrang mit Schienen (1) und Schwellen (5), mit einem offenen oder geschlossenen Rahmen zur Ermittlung wirkender Vertikalkräfte, dadurch gekennzeichnet, daß der Rahmen aus einem parallel zu den Schienen (1) angeordneten Längsträger (4) und aus einem Querträger (3) besteht, daß eine Schiene (1) über den Querträger (3) auf dem Längsträger (4) abgestützt ist, daß der Längsträger (4) auf den Schwellen (5) abgestützt ist und daß ein Meßwertaufnehmer (7) zwischen der Schiene (1) und dem Längsträger (4) an dem Querträger (3) angeordnet ist.

2. Waage nach Anspruch 1, dadurch gekennzeichnet, daß der Querträger (3) als Meßwertaufnehmer ausgebildet ist.

3. Waage nach Anspruch 1 oder 2, dadurch gekennzeichnet, daß für jede Schiene (1) ein Rahmen vorgesehen ist, wobei an beiden Seiten einer Schiene (1) je ein Längsträger (4) angeordnet ist.

4. Waage nach einem der Ansprüche 1 - 3, dadurch gekennzeichnet, daß der Längsträger (4) etwa auf gleicher Höhe wie die Schienen (1) und der Querträger (3) zwischen den Schwellen (5) angeordnet ist.

5. Waage nach einem der vorhergehenden Ansprüche, dadurch gekennzeichnet, daß der Längsträger (4) aus einem Doppel-T-Träger oder einer Schiene bestehet.

6. Waage nach einem der vorhergehenden Ansprüche, dadurch gekennzeichnet, daß sich der Rahmen über gegebenenfalls vorhandene Trennstellen an den Schienen (1) zur Trennung des Waagenbereichs vom übrigen Schienenstrang hinaus erstreckt.

7. Waage nach einem der Ansprüche 1 bis 5, dadurch gekennzeichnet, daß bei mehreren Meßwertaufnehmern (7) diese an einem oder an beiden Schienensträngen parallel geschaltet sind und damit eine Addition von Meßsignalen für statische Wägungen ermöglichen oder daß die Meßsignale der Meßwertaufnehmer (7) für Fahrtwägungen einzeln oder gruppenweise auswertbar sind.

## Claims

1. A rail vehicle weighing apparatus in a rail track with rails (1) and sleepers (5), with an open or closed frame for the determination of active vertical forces, characterised in that the frame consists of a longitudinal member (4) arranged in parallel to the rails (1) and of a transverse member (3), that a rail (1) is supported on the longitudinal member (4) via the transverse member (3), that the longitudinal member (4) is supported on the sleepers (5), and that a sensor (7) is arranged on the transverse member (3) between the rail (1) and the longitudinal member (4).

2. A weighing apparatus as claimed in Claim 1, characterised in that the transverse member (3) has the form of a sensor.

3. A weighing apparatus as claimed in Claim 1 or 2, characterised in that a frame is provided for each rail (1), a respective longitudinal member (4) being arranged on both sides of a rail (1).

4. A weighing apparatus as claimed in one of Claims 1 - 3, characterised in that the longitudinal member (4) is arranged approximately at the same level as the rails (1), and the transverse member (3) is arranged between the sleepers (5).

5. A weighing apparatus as claimed in one of the preceding claims, characterised in that the longitudinal member (4) consists of a double T-beam or a rail.

6. A weighing apparatus as claimed in one of the preceding claims, characterised in that the frame extends beyond any separation points in the rails (1) for separating the weighing zone from the rest of the rail track.

7. A weighing apparatus as claimed in one of claims 1 to 5 characterised in that with a plurality of sensors (7) these are connected in parallel to one or both rail lengths and thereby permit an addition of measurement signals for static weighings or in that the measurement signals of the sensors (7) can be analyzed for travelling weighing operations individually or in groups.

## Revendications

1. Bascule pour véhicule ferroviaires dans un tronçon de voie ferrée avec rails (1) et traverses (5), avec un cadre ouvert ou fermé destiné à déterminer les forces verticales agissant, caractérisée en ce que le cadre est constitué d'un longeron (4) parallèle aux rails (1) et d'une poutre transversale (3), et en ce qu'un rail (1) prend appui par l'intermédiaire de la poutre transversale (3) sur un longeron (4), en ce que le longeron (4) prend appui sur les traverses (5) et en ce qu'un capteur de valeurs de mesure (7) est placé entre le rail (1) et le longeron (4) sur la poutre transversale (3).

2. Bascule selon la revendication 1, caractérisée en ce que la poutre transversale (3) est conçue à la manière d'un capteur de valeurs de mesure.

3. Bascule selon la revendication 1 ou 2, caractérisée en ce que pour chaque rail (1) il est prévu un cadre, un longeron (4) étant placé sur chacun des deux côtés d'un rail (1).

4. Bascule selon l'un des revendications 1 à 3, caractérisée en ce que le longeron (4) est placé à peu près à même hauteur que les rails (1) et la poutre transversale (3), entre les traverses (5).

5. Bascule selon l'une des revendications précédentes, caractérisée en ce que le longeron (4) est constitué d'un double poutre en T ou d'un rail.

6. Bascule selon l'une des revendications précédentes, caractérisée en ce que le cadre s'étend sur d'éventuels points de sectionnement des rails (1), afin de séparer la zone de la bascule du reste du tronçon de voie ferrée.

7. Bascule selon l'une des revendications 1 à 5, caractérisée en ce que dans le cas où il est prévu plusieurs capteurs de valeurs de mesure (7), ceux-ci sont montés en parallèle sur l'une ou les deux tronçons de voie ferrée et permettent donc l'addition des signaux de mesure pour des pesages statiques ou en ce que les signaux de mesure des capteurs de valeurs de mesure (7) peuvent être exploités séparément ou par groupe pour des pesages en marche.
